# EUROPEAN PATENT APPLICATION

(11) **EP 4 851 805 A1**
(43) Date of publication of application: **09.12.2026**
(21) Application number: 26181491.7
(22) Date of filing: 28.05.2026
(51) Int. Cl.: G06F 9/50, G06F 15/173, H04L 49/65

(54) **CDI SYSTEM, DEVICE MANAGEMENT APPARATUS, AND DEVICE MANAGEMENT METHOD**

(30) Priority: 06.06.2025 JP 2025095172
(71) Applicant: Fsas Technologies Inc., Nakahara-ku Kawasaki-shi, Kanagawa 211-0012 (JP)
(72) Inventor: TANEDA, Masahiro, Kawasaki-shi, 211-0012 (JP); HANADA, Mitsuru, Kawasaki-shi, 211-0012 (JP); FURUHASHI, Yoshihiro, Kawasaki-shi, 211-0012 (JP); HOSOKAWA, Yuka, Kawasaki-shi, 211-0012 (JP); IWAMA, Yamato, Kawasaki-shi, 211-0012 (JP)
(74) Representative: Haseltine Lake Kempner LLP

(57) **Abstract**

A logical computer is formed by a specific node among a first node (N1), a second node (N2), and a third node (N3) and a specific device among a first device (D1), a second device (D2), and a third device (D3). A device management apparatus (10) refers to a table (TD) in which a first device port (PD1), a second device port (PD2), and a third device port (PD3) are correlated with a first device identifier, a second device identifier, and a third device identifier of the first device (D1), the second device (D2), and the third device (D3) respectively, based on an identifier of an unnecessary device that is a device determined to be unnecessary in the logical computer, thereby recognizing a device port connected to the unnecessary device and disconnecting a device port connected to the unnecessary device and a node port to which the specific node is connected.

## Description

### FIELD

The embodiment discussed herein is related to a CDI system, a device management apparatus, and a device management method.

### BACKGROUND

In a computer system used in a core business operation or a data center in an enterprise, a method called "clustering" in which a plurality of nodes is managed as a single group is often used.

In the clustering, a "node cluster" in which a plurality of nodes is integrated is formed, and nodes are efficiently allocated to jobs executed in the node cluster.

There is also a "Composable Disaggregated Infrastructure (CDI) system" in which the configuration of a device connected to a node can be dynamically changed depending on the load applied to the entire node cluster. In the CDI system, clustering software for allocating nodes in a node cluster and an apparatus (hereinafter, sometimes referred to as a "device management apparatus") for managing devices in the CDI system cooperate with each other to add or delete devices on a device-by-device basis, which enables efficient allocation of resources in the entire CDI system depending on the usage situation.

Examples of related-art are described in JP 2023-036653 A, JP 2019-186860 A, and JP 2017-209869 A.

In the CDI system, a "logical computer" in which a specific node and a specific device are connected is formed, and the node and the device in the logical computer are connected via a switch having a plurality of ports.

In a case where an unnecessary device (hereinafter, sometimes referred to as an "unnecessary device"), such as a device that has not been used for a while, is present in the logical computer, the unnecessary device is separated from the logical computer, which enables the separated device to be used in another logical computer.

However, it is difficult for the device management apparatus to recognize to which port in the switch the unnecessary device is connected, and it is thus difficult to separate the unnecessary device from the logical computer.

In light of the above, the present disclosure proposes a technology which enables an unnecessary device to be separated from a logical computer.

### SUMMARY

According to an aspect of an embodiment, a CDI system includes a plurality of nodes, a plurality of devices, a switch including a plurality of node ports connected to the plurality of nodes and a plurality of device ports connected to the plurality of devices, a logical computer formed by a specific node of the plurality of nodes and a specific device of the plurality of devices, and a device management apparatus configured to manage connection states between the plurality of node ports and the plurality of device ports. The device management apparatus refers to, based on an identifier of an unnecessary device that is a device determined to be unnecessary in the logical computer among the specific device, a table in which the plurality of device ports and a plurality of identifiers of the plurality of devices are correlated with each other, and thus recognizes the device port connected to the unnecessary device, and disconnects the recognized device port and the node port to which the specific node is connected from each other.

### BRIEF DESCRIPTION OF DRAWINGS

FIG. 1 is a diagram illustrating an example of the configuration of a CDI system of the present disclosure;
FIG. 2 is a diagram illustrating an example of the configuration of a device management apparatus of the present disclosure;
FIG. 3 is a diagram illustrating an example of a device management table of the present disclosure;
FIG. 4 is a diagram illustrating an example of the operation in a registration phase of the CDI system of the present disclosure;
FIG. 5 is a diagram illustrating an example of the operation in a registration phase of the CDI system of the present disclosure;
FIG. 6 is a diagram illustrating an example of the operation in a registration phase of the CDI system of the present disclosure;
FIG. 7 is a diagram illustrating an example of the operation in a registration phase of the CDI system of the present disclosure;
FIG. 8 is a diagram illustrating an example of the operation in a registration phase of the CDI system of the present disclosure;
FIG. 9 is a diagram illustrating an example of the operation in a registration phase of the CDI system of the present disclosure;
FIG. 10 is a diagram illustrating an example of the operation in an operation phase of the CDI system of the present disclosure; and
FIG. 11 is a diagram illustrating an example of the operation in an operation phase of the CDI system of the present disclosure.

### DESCRIPTION OF EMBODIMENT

Hereinafter, an embodiment of the present disclosure will be described with reference to the drawings.

In the following embodiment, the same parts or the same processing are denoted by the same reference numerals, and redundant description may be omitted.

### Configuration of CDI System

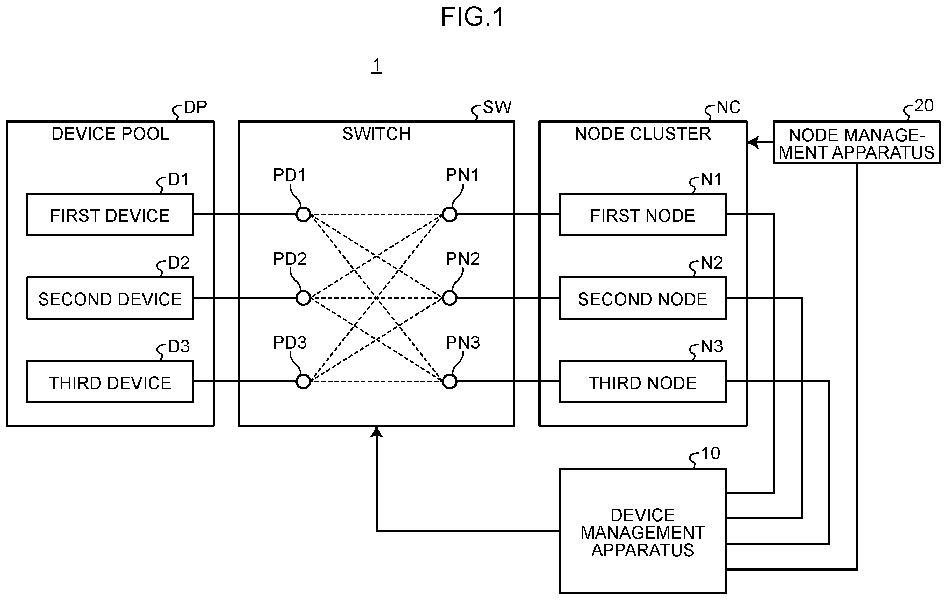

FIG. 1 is a diagram illustrating an example of the configuration of a CDI system of the present disclosure. In FIG. 1, a CDI system 1 includes a device management apparatus 10, a node management apparatus 20, a node cluster NC, a device pool DP, and a switch SW.

The node cluster NC includes a first node N1, a second node N2, and a third node N3. Hereinafter, the first node N1, the second node N2, and the third node N3 may be collectively referred to as a "node NN". An example of the node NN is a computer.

The device pool DP includes a first device D1, a second device D2, and a third device D3. Hereinafter, the first device D1, the second device D2, and the third device D3 may be collectively referred to as a "device DD". Examples of the device DD include a Graphics Processing Unit (GPU), a Solid State Drive (SSD), and a Compute Express Link (registered trademark) (CXL) memory.

The switch SW includes a first device port PD1 that is a port to which the first device D1 is connected, a second device port PD2 that is a port to which the second device D2 is connected, and a third device port PD3 that is a port to which the third device D3 is connected. Further, the switch SW includes a first node port PN1 that is a port to which the first node N1 is connected, a second node port PN2 that is a port to which the second node N2 is connected, and a third node port PN3 that is a port to which the third node N3 is connected. Hereinafter, the first device port PD1, the second device port PD2, and the third device port PD3 may be collectively referred to as a "device port PD". Further, hereinafter, the first node port PN1, the second node port PN2, and the third node port PN3 may be collectively referred to as a "node port PN". An example of the switch SW is a Peripheral Component Interconnect Express (PCIe) switch.

The device management apparatus 10 manages the device DD in the device pool DP. An example of the device management apparatus 10 is a server.

The node management apparatus 20 uses clustering software installed in advance in the node management apparatus 20 to allocate the node NN in the node cluster NC and allocate the device DD in the device pool DP, and forms a logical computer with the allocated node NN and device DD. An example of the node management apparatus 20 is a server.

Note that the device management apparatus 10 and the node management apparatus 20 may be placed separately from the node cluster NC as illustrated in FIG. 1, or may be placed in the node cluster NC. In a case where the device management apparatus 10 or the node management apparatus 20 is placed in the node cluster NC, any node NN may be used as the device management apparatus 10 or the node management apparatus 20.

### Configuration of Device Management Apparatus

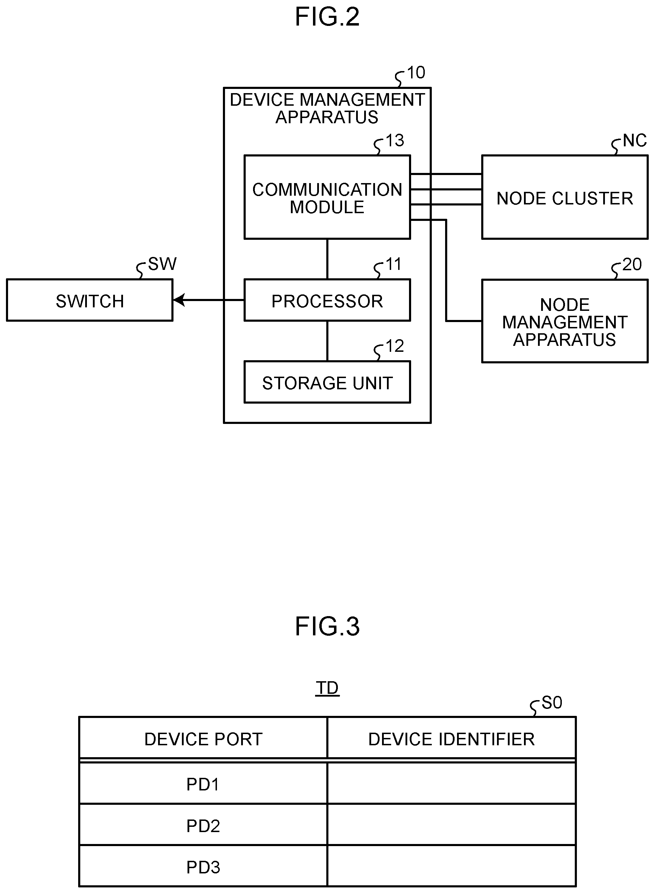

FIG. 2 is a diagram illustrating an example of the configuration of a device management apparatus of the present disclosure. In FIG. 2, the device management apparatus 10 includes a processor 11, a storage unit 12, and a communication module 13. An example of the processor 11 is a Central Processing Unit (CPU). Examples of the storage unit 12 include a storage and a memory.

The processor 11 can communicate with each node NN in the node cluster NC by using the communication module 13. The processor 11 can also communicate with the node management apparatus 20 by using the communication module 13. The processor 11 manages a connection state of connection/disconnection between the device port PD and the node port PN in the switch SW.

### Device Management Table

FIG. 3 is a diagram illustrating an example of a device management table of the present disclosure. A device management table TD illustrated in FIG. 3 is stored in the storage unit 12 of the device management apparatus 10. In the device management table TD, each device port PD and an identifier (hereinafter, sometimes referred to as a "device identifier") with which each device DD can be uniquely identified are correlated with each other. FIG. 3 illustrates the device management table TD in an initial state S0.

### Operation of CDI System

Hereinafter, the operation of the CDI system 1 will be described separately for operation in a registration phase and operation in an operation phase. The following description takes an example of the case where the device identifier of the first device D1 (hereinafter, sometimes referred to as a "first device identifier") is "AAAA-BB-CCCCC", the device identifier of the second device D2 (hereinafter, sometimes referred to as a" second device identifier") is "DDDD-EE-FFFFF", and the device identifier of the third device D3 (hereinafter, sometimes referred to as a "third device identifier") is "XXXX-YY-ZZZZZ". In the following description, a "broken line" in the switch SW indicates that the device port PD and the node port PN are in a disconnected state, and a "solid line" in the switch SW indicates that the device port PD and the node port PN are in a connected state.

### Operation in Registration Phase

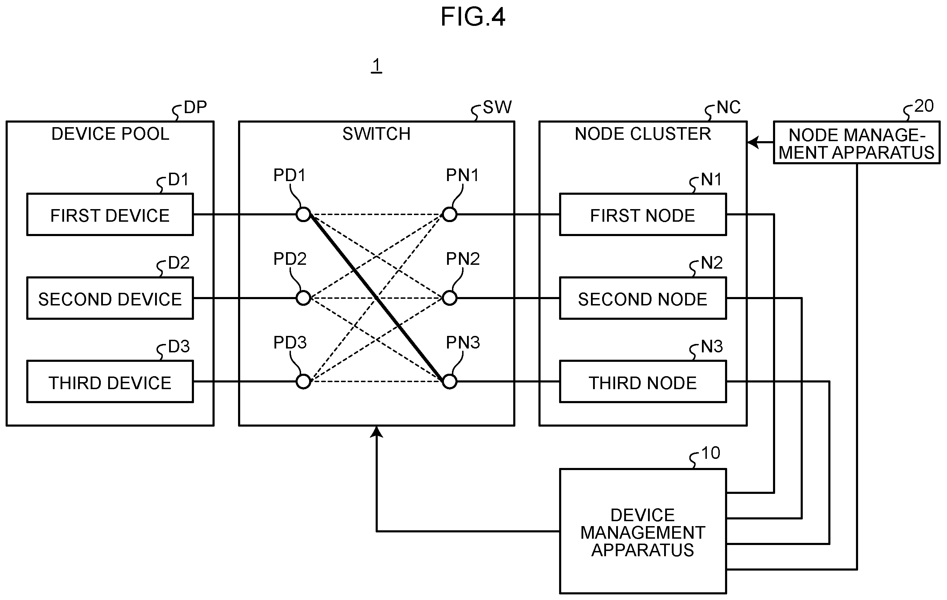

FIGS. 4 to 9 are diagrams each illustrating an example of the operation in the registration phase of the CDI system of the present disclosure.

First, the processor 11 of the device management apparatus 10 designates any one node NN in the node class NC as a "device information acquisition server". Here, for example, it is assumed that the third node N3 among the first node N1, the second node N2, and the third node N3 is designated as the device information acquisition server. Alternatively, for example, the processor 11 designates the device information acquisition server in the node cluster NC at the time of initialization of the CDI system 1.

Next, as illustrated in FIG. 4, the processor 11 operates the switch SW to connect the first device port PD1 and the third node port PN3. This allows the first device D1 to be connected to the third node N3. The third node N3 connected to the first device D1 acquires the first device identifier "AAAA-BB-CCCCC" from the first device D1, and transmits the acquired first device identifier "AAAA-BB-CCCCC" to the device management apparatus 10.

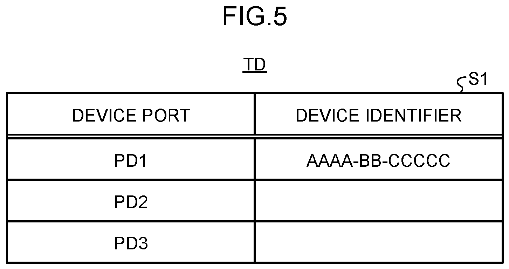

The processor 11 of the device management apparatus 10 that has received the first device identifier "AAAA-BB-CCCCC" from the third node N3 in a state where the first device port PD1 is connected to the third node port PN3 registers the first device identifier "AAAA-BB-CCCCC" in correlation with the first device port PD1 in the device management table TD as illustrated in FIG. 5. As a result, the device management table TD is updated from the initial state S0 illustrated in FIG. 3 to a first state S1 illustrated in FIG. 5.

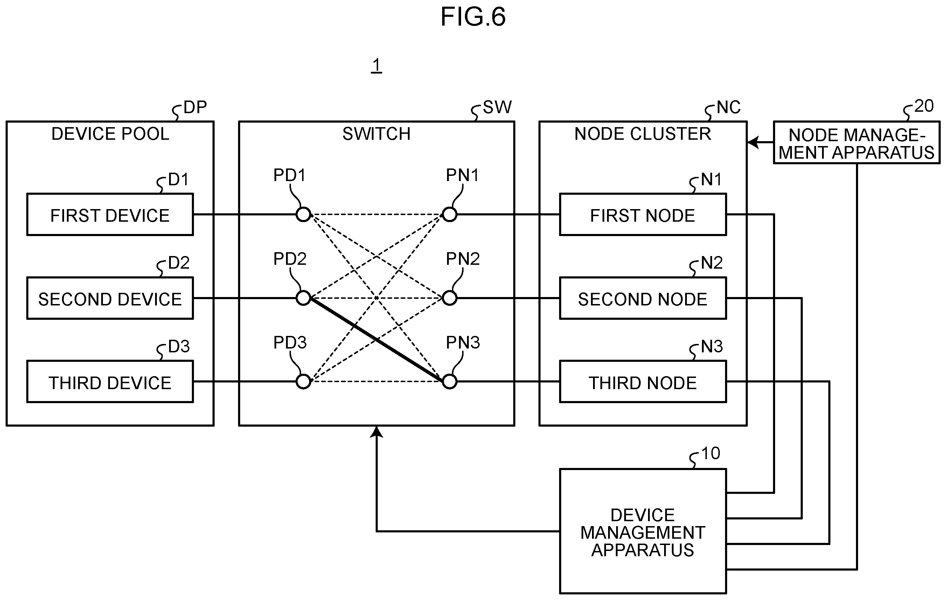

Next, as illustrated in FIG. 6, the processor 11 operates the switch SW to connect the second device port PD2 and the third node port PN3. This allows the second device D2 to be connected to the third node N3. The third node N3 connected to the second device D2 acquires the second device identifier "DDDD-EE-FFFFF" from the second device D2, and transmits the acquired second device identifier "DDDD-EE-FFFFF" to the device management apparatus 10.

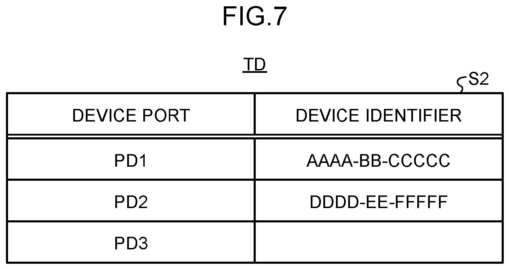

The processor 11 of the device management apparatus 10 that has received the second device identifier "DDDD-EE-FFFFF" from the third node N3 in a state where the second device port PD2 is connected to the third node port PN3 registers the second device identifier "DDDD-EE-FFFFF" in correlation with the second device port PD2 in the device management table TD as illustrated in FIG. 7. As a result, the device management table TD is updated from the first state S1 illustrated in FIG. 5 to a second state S2 illustrated in FIG. 7.

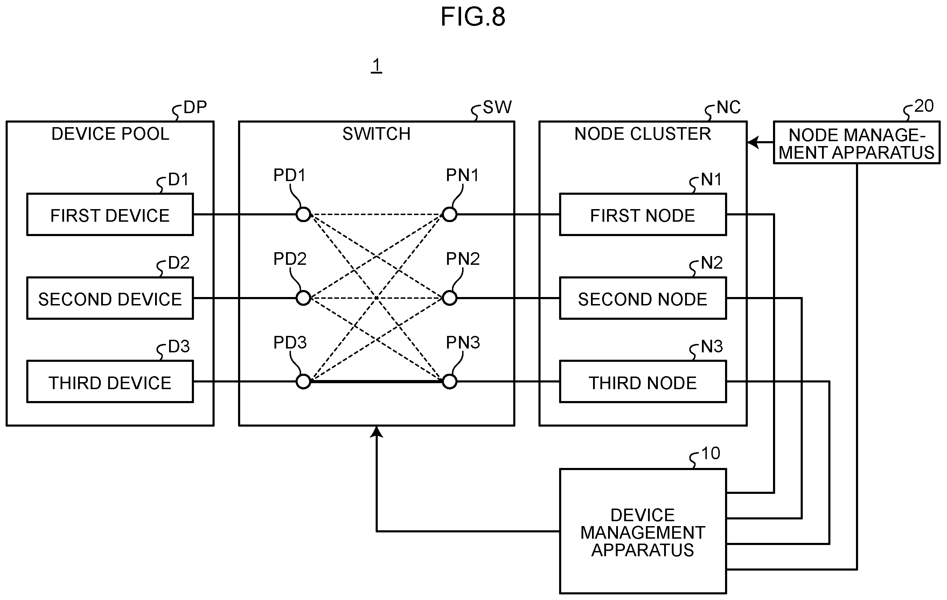

Next, as illustrated in FIG. 8, the processor 11 operates the switch SW to connect the third device port PD3 and the third node port PN3. This allows the third device D3 to be connected to the third node N3. The third node N3 connected to the third device D3 acquires the third device identifier "XXXX-YY-ZZZZZ" from the third device D3, and transmits the acquired third device identifier "XXXX-YY-ZZZZZ" to the device management apparatus 10.

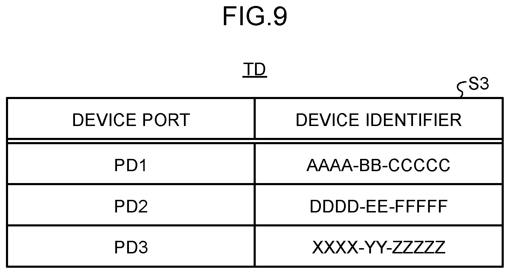

The processor 11 of the device management apparatus 10 that has received the third device identifier "XXXX-YY-ZZZZZ" from the third node N3 in a state where the third device port PD3 is connected to the third node port PN3 registers the third device identifier "XXXX-YY-ZZZZZ" in correlation with the third device port PD3 in the device management table TD as illustrated in FIG. 9. As a result, the device management table TD is updated from the second state S2 illustrated in FIG. 7 to a third state S3 illustrated in FIG. 9.

As described above, in the registration phase, the processor 11 operates the switch SW to sequentially connect the third node N3, which is the device information acquisition server, to the first device D1, the second device D2, and the third device D3 one by one, thereby acquiring, via the third node N3, the first device identifier, the second device identifier, and the third device identifier from the first device D1, the second device D2, and the third device D3, respectively. Then, the processor 11 updates the device management table TD using the acquired first device identifier, second device identifier, and third device identifier. For example, the processor 11 updates the device management table TD as described above at the time of initialization of the CDI system 1.

The operation examples in the registration phase have been described above.

### Operation in Operation Phase

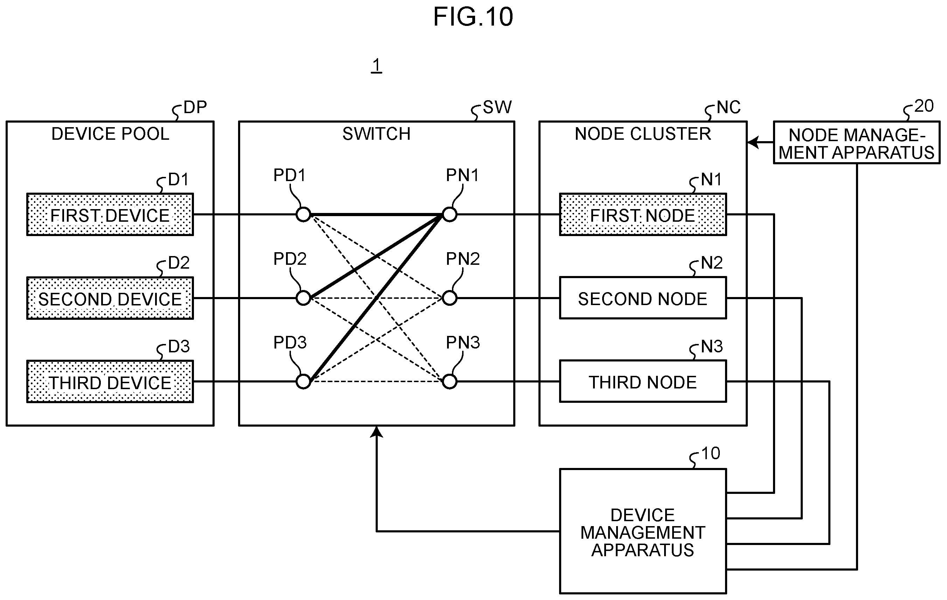

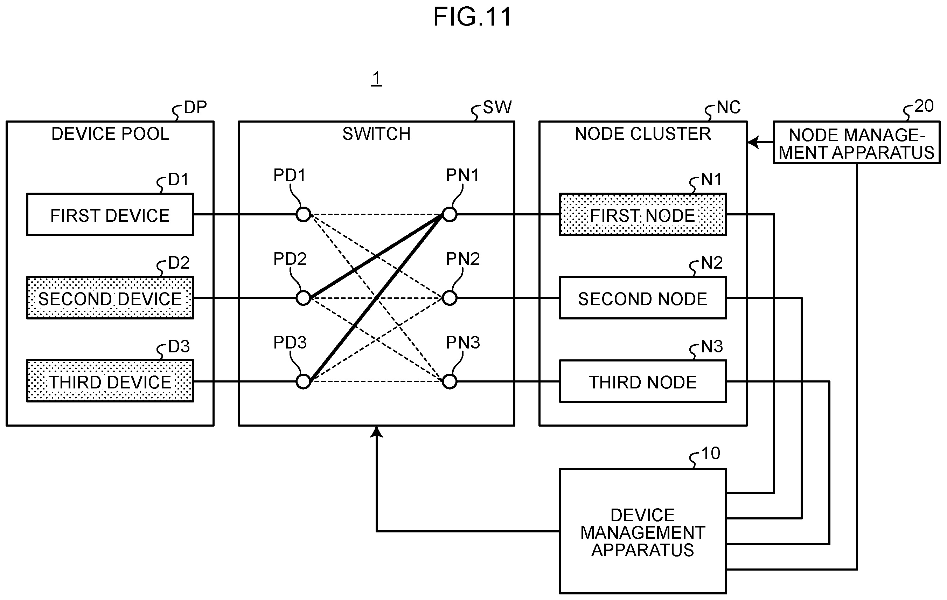

FIGS. 10 and 11 are diagrams each illustrating an example of the operation in the operation phase of the CDI system of the present disclosure.

In FIG. 10, the first node port PN1 is connected to each of the first device port PD1, the second device port PD2, and the third device port PD3, so that a logical computer is formed by the first node N1, which is one specific node, and the first device D1, the second device D2, and the third device D3, which are three specific nodes.

In a state illustrated in FIG. 10 in which a logical computer is formed by the first node N1, the first device D1, the second device D2, and the third device D3, when the node management apparatus 20 determines that the first device D1 is an unnecessary device, the node management apparatus 20 notifies the device management apparatus 10 of the first device identifier "AAAA-BB-CCCCC" as a device identifier of the unnecessary device (hereinafter, sometimes referred to as an "unnecessary device identifier").

The processor 11 of the device management apparatus 10 notified of the first device identifier "AAAA-BB-CCCCC" as the unnecessary device identifier from the node management apparatus 10 refers to the device management table TD (FIG. 9) stored in the storage unit 12 based on the first device identifier "AAAA-BB-CCCCC". As a result, the processor 11 recognizes that the first device port PD1 is correlated with the first device identifier "AAAA-BB-CCCCC", that is, that the first device port PD1 is connected to the first device D1 that is an unnecessary device.

Therefore, as illustrated in FIG. 11, the processor 11 disconnects the first device port PD1 and the first node port PN1 from each other in the switch SW to separate the first device D1 that is an unnecessary device from the logical computer. As a result, a new logical computer is formed by the first node N1, the second device D2, and the third device D3.

As described above, in the operation phase, the processor 11 refers to the device management table TD based on the unnecessary device identifier to thereby recognize a device port connected to the unnecessary device. The processor 11 then disconnects the node port and the device port connected to the unnecessary device from each other to thereby separate the unnecessary device from the logical computer.

The operation examples in the operation phase have been described above.

As described above, the CDI system of the present disclosure (CDI system 1 of the embodiment) includes a plurality of nodes (first node N1, second node N2, and third node N3 of the embodiment), a plurality of devices (first device D1, second device D2, and third device D3 of the embodiment), a switch (switch SW of the embodiment), and a device management apparatus (device management apparatus 10 of the embodiment). The switch includes a plurality of node ports (first node port PN1, second node port PN2, and third node port PN3 of the embodiment) connected to the plurality of nodes, and a plurality of device ports (first device port PD1, second device port PD2, and third device port PD3 of the embodiment) connected to the plurality of devices. Further, in the CDI system of the present disclosure, a logical computer is formed by a specific node of the plurality of nodes and a specific device of the plurality of devices. The device management apparatus manages connection states between the plurality of node ports and the plurality of device ports. In addition, the device management apparatus refers to, based on an identifier of an unnecessary device (unnecessary device identifier of the embodiment) which is a device determined to be unnecessary in the logical computer among the specific devices, a table (device management table TD of the embodiment) in which the plurality of device ports and a plurality of identifiers (first device identifier, second device identifier, and third device identifier of the embodiment) of the plurality of devices are correlated with each other, thereby recognizing the device port connected to the unnecessary device. Then, the device management apparatus disconnects the device port connected to the unnecessary device and the node port to which the specific node is connected from each other.

In this way, the unnecessary device can be separated from the logical computer.

The device management apparatus designates any one of the plurality of nodes as an information acquisition server (device information acquisition server of the embodiment). Further, the device management apparatus operates the switch to sequentially connect the information acquisition server and each of the plurality of devices, thereby acquiring the plurality of identifiers of the plurality of devices from each of the plurality of devices via the information acquisition server. Then, the device management apparatus updates the table using the plurality of acquired identifiers.

In this way, a table can be created in which the plurality of device ports and the plurality of devices are accurately correlated with each other.

In addition, the device management apparatus designates the information acquisition server at the time of initialization of the CDI system.

This makes it possible to reliably designate the information acquisition server.

The device management apparatus also updates the table at the time of initialization of the CDI system.

This enables creating a table with correct contents even when there is a change in a device included in the CDI system, such as replacement for a device.

According to the technology of the present disclosure, an unnecessary device can be separated from a logical computer.

## Claims

1. A CDI system (1) comprising:
a plurality of nodes (N1, N2, N3);
a plurality of devices (D1, D2, D3);
a switch (SW) including a plurality of node ports (PN1, PN2, PN3) connected to the plurality of nodes (N1, N2, N3) and a plurality of device ports (PD1, PD2, PD3) connected to the plurality of devices (D1, D2, D3);
a logical computer formed by a specific node of the plurality of nodes (N1, N2, N3) and a specific device of the plurality of devices (D1, D2, D3); and
a device management apparatus (10) configured to manage connection states between the plurality of node ports and the plurality of device ports, wherein
the device management apparatus (10)
refers to, based on an identifier of an unnecessary device that is a device determined to be unnecessary in the logical computer among the specific device, a table (TD) in which the plurality of device ports (PD1, PD2, PD3) and a plurality of identifiers of the plurality of devices (D1, D2, D3) are correlated with each other, and thus recognizes the device port connected to the unnecessary device, and
disconnects the recognized device port and the node port to which the specific node is connected from each other.

2. The CDI system (1) according to claim 1, wherein
the device management apparatus (10)
designates any one of the plurality of nodes (N1, N2, N3) as an information acquisition server,
operates the switch (SW) to sequentially connect the information acquisition server and each of the plurality of devices (D1, D2, D3) to acquire the plurality of identifiers of the plurality of devices (D1, D2, D3) from the plurality of devices (D1, D2, D3) via the information acquisition server, and
updates the table (TD) using the plurality of identifiers acquired.

3. The CDI system (1) according to claim 2, wherein
the device management apparatus (10) designates the information acquisition server at initialization of the CDI system (1).

4. The CDI system (1) according to claim 2, wherein
the device management apparatus (10) updates the table (TD) at initialization of the CDI system (1).

5. A device management apparatus (10) used in a CDI system (1), the CDI system (1) including:
a plurality of nodes (N1, N2, N3);
a plurality of devices (D1, D2, D3);
a switch (SW) including a plurality of node ports (PN1, PN2, PN3) connected to the plurality of nodes (N1, N2, N3) and a plurality of device ports (PD1, PD2, PD3) connected to the plurality of devices (D1, D2, D3); and
a logical computer formed by a specific node of the plurality of nodes (N1, N2, N3) and a specific device of the plurality of devices (D1, D2, D3),
the device management apparatus (10) being configured to manage connection states between the plurality of node ports and the plurality of device ports, the device management apparatus (10) comprising:
a processor (11) configured to refer to a table (TD) in which the plurality of device ports (PD1, PD2, PD3) and a plurality of identifiers of the plurality of devices (D1, D2, D3) are correlated with each other based on an identifier of an unnecessary device that is a device determined to be unnecessary in the logical computer among the specific device, and thus recognize the device port connected to the unnecessary device; and disconnect the recognized device port and the node port to which the specific node is connected from each other.

6. A device management method used in a device management apparatus, the device management apparatus being used in a CDI system and being configured to manage connection states between the plurality of node ports and the plurality of device ports, the CDI system including:
a plurality of nodes;
a plurality of devices;
a switch including a plurality of node ports connected to the plurality of nodes and a plurality of device ports connected to the plurality of devices; and
a logical computer formed by a specific node of the plurality of nodes and a specific device of the plurality of devices,
the device management method comprising:
referring to, by the device management apparatus, a table in which the plurality of device ports and a plurality of identifiers of the plurality of devices are correlated with each other based on an identifier of an unnecessary device that is a device determined to be unnecessary in the logical computer among the specific device, and thus recognizing the device port connected to the unnecessary device; and
disconnecting, by the device management apparatus, the recognized device port and the node port to which the specific node is connected.
